# EUROPÄISCHE PATENTSCHRIFT

(11) **EP 0 587 532 B1**
(45) Veröffentlichungstag und Bekanntmachung des Hinweises auf die Patenterteilung: **18.03.1998**
(21) Anmeldenummer: 93810604.4
(22) Anmeldetag: 25.08.1993
(51) Int. Cl.: A47J 27/09

(54) **Sicherheitsventil für einen Dampfdruckkochtopf**
Safety release valve for pressure cooker
Clapet de sécurité pour auto-cuiseur

(30) Priorität: 01.09.1992 CH 2718/92
(43) Veröffentlichungstag der Anmeldung: 16.03.1994
(73) Patentinhaber: Heinrich Kuhn Metallwarenfabrik Aktiengesellschaft, 8486 Rikon im Tösstal (CH)
(72) Erfinder: Hüppi, Marcel W., CH-9524 Zuzwil (CH)
(74) Vertreter: Groner, Manfred

(56) Entgegenhaltungen:
- EP-A- 0 051 961
- EP-A- 0 343 325
- DE-A- 3 227 245
- DE-B- 1 116 006
- FR-A- 2 673 261
- US-A- 3 914 528

## Beschreibung

Die Erfindung betrifft ein Sicherheitsventil für einen Dampfdruckkochtopf, mit einem in einem Ventilgehäuse axial verschiebbar gelagerten und unter der Wirkung einer Ventilfeder stehenden Druckstift.

Bei dem durch die CH-A-631 063 bekannten gattungsgemässen Sicherheitsventil ist die axiale Verschiebung des Druckstiftes im Ventilgehäuse im wesentlichen proportional zum Druck im Dampfdruckkochtopf. Der Druckstift steht mit dem Innern des Dampfdruckkochtopfes in Verbindung und wird bei Ueberdruck ausgehend von einer Nullposition gegen die rückwirkende Kraft der Ventilfeder verschoben. Durch die CH-A-411 272 ist ein ähnliches Sicherheitsventil bekannt, das zum Anzeigen des Druckes im Topf mit einer akustischen oder optischen Signaleinrichtung versehen ist.

Durch die EP-A-0 343 325 ist ein Dampfdruckkochtopf bekannt, bei dem Mittel zum Erfassen des Drucks im Innern des Kochtopf vorgesehen sind und dieser Druck zum Steuern der Energiezufuhr zu der Kochstelle benutzt wird. Zur Druckmessung ist ein Reed-Relais vorgesehen, das bei einem vorwählbaren Druck im Dampfdruckkochtopf anspricht.

Zweck der Erfindung ist es, ein Sicherheitsventil dieser Gattung zu schaffen, das eine Druckanzeige aufgrund eines elektrischen Signals erlaubt, und das darüber hinaus funktionssicher und genau arbeitet und das trotzdem konstruktiv einfach und robust ausgebildet ist. Mit dem Ventil soll im wesentlichen jeder Druck zwischen Null und einem oberen Grenzdruck messbar sein.

Die Aufgabe ist bei einem gattungsgemässen Sicherheitsventil gemäss Anspruch 1 gelöst. Ein wesentlicher Vorteil des erfindungsgemässen Ventils besteht darin, dass die Messung berührungslos ist. Das Ventil kann dadurch so gestaltet werden, dass seine Reinigung durch die Messeinrichtung nicht erschwert wird und die Sicherheitsfunktionen erfüllt sind. Ein Vorteil eines solchen Sicherheitsventils wird auch darin gesehen, dass dieses gegenüber einem üblichen Ventil dieser Gattung in der mechanischen Funktion nicht und im grundsätzlichen mechanischen Aufbau nur geringfügig verändert werden muss.

Nach einer Weiterbildung der Erfindung ist in den Schaft des Druckstiftes ein Stabmagnet eingesetzt, der die genannten Mittel zur Erzeugung des auf den Positionssensor wirkenden Magnetfeldes bildet. Dieser Druckstift kann äusserlich genau gleich wie ein an sich bekannter Druckstift ausgebildet sein. Ein stark korrosionsanfälliger Stabmagnet kann im Druckstift mechanisch und chemisch geschützt untergebracht sein.

Nach einer weiteren Ausführungsvariante weist der Druckstift einen konischen Ferromagneten auf, der in einem Luftspalt eines Magnetsystems angeordnet ist. Der Positionssensor ist hierbei ebenfalls in einem Luftspalt des Magnetsystems derart angeordnet, dass das vom Positionssensor detektierte Magnetfeld bei der Verschiebung des Druckstiftes mit der Veränderung der mittleren magnetischen Permeabilität des Luftspaltes variiert. Das vom Positionssensor detektierte Magnetfeld variiert somit mit der Veränderung der mittleren magnetischen Permeabilität des Luftspaltes, der hier im wesentlichen aus dem Druckstift besteht. Die Druckmessung mit diesem Sicherheitsventil ist besonders masstolerant, linear und zudem stabil.

Ist nach einer Weiterbildung der Erfindung als Positionssensor ein analoger Hallsensor vorgesehen, so kann mit diesem im Pulsbetrieb magnetisch die Position des Druckstiftes abgetastet werden, was eine besonders batterieschonende Messung ermöglicht. Auch mit einer Knopfzelle ist in diesem Fall eine lange Messdauer möglich.

Weitere vorteilhafte Merkmale ergeben sich aus den abhängigen Ansprüchen sowie der nachfolgenden Beschreibung.

Zwei Ausführungsbeispiele der Erfindung werden nachfolgend anhand der Zeichnungen näher erläutert. Es zeigen:
- Fig. 1 bis 3: in Längsschnitt ein erfindungsgemässes Sicherheitsventil, wobei jeweils unterschiedliche Drücke im Dampfkochtopf angenommen werden,
- Fig. 4: in Längsschnitt ein Sicherheitsventil nach einer Variante,
- Fig. 5: ein Schnitt entlang der Linie V-V in Fig. 4, und
- Fig. 6: in willkürlichen Einheiten den Verlauf der am Hallsensor abgreifbaren Spannung in Bezug auf den Druck im Dampfdruckkochtopf.

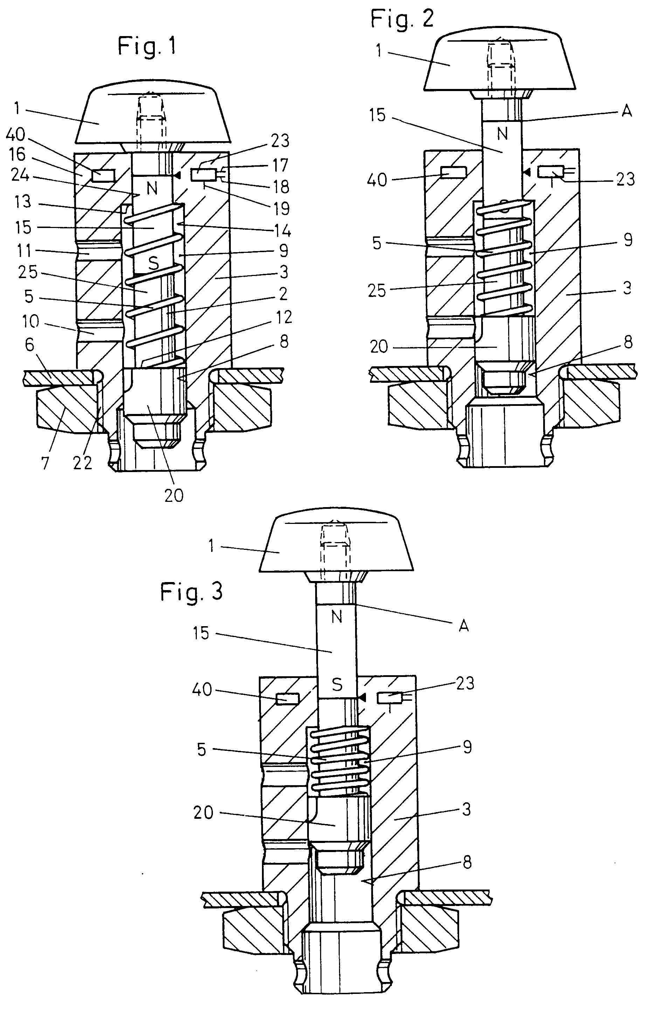

Das Sicherheitsventil gemäss Fig. 1 weist ein im wesentlichen zylindrisches Ventilgehäuse 3 auf, das mittels einer Mutter 7, die auf ein Aussengewinde 22 des Ventilgehäuses 3 aufgeschraubt ist, an einem Topfdeckel 6 befestigt ist. In einer Bohrung 14 des Ventilgehäuses ist ein Druckstift 2 axial verschiebbar gelagert. Am oberen Ende ragt der Druckstift 2 über das Ventilgehäuse 3 hinaus und ist hier in bekannter Weise mit einer aufgeschraubten Hutmutter 1 versehen. An seinem anderen Ende besitzt der Druckstift 2 einen Ventilkolben 20, der mit einem Ventilsitz 8 der Bohrung 14 zusammenarbeitet und der einen Absatz 12 zur Abstützung einer ebenfalls an sich bekannten Ventilfeder 5 aufweist. Eine obere Innenschulter 13 bildet eine gegenüberliegende Abstützung der Ventilfeder 5. Die Druckfeder 5 befindet sich in einem Innenraum 9 des Ventilgehäuses 3, der über eine Ausblasöffnung 10 mit der Aussenluft in Verbindung ist. Eine weitere Bohrung 11 dient zur Entlastung von komprimierter Luft im Innenraum 9. Der soweit beschriebene Aufbau des Sicherheitsventils entspricht demjenigen bereits bekannter Ventile.

Das Ventilgehäuse 3 weist am oberen Ende einen Bereich 16 auf, der eine mittige Bohrung 24 für den Durchtritt des Druckstiftes 2 besitzt. Im oberen Bereich 16 des Gehäuses 3 sind ein hier als Hallsensor 23 ausgebildeter magnetischer Halbleiter-Positionssensor sowie eine Batterie 40 angeordnet. Der Hallsensor 23 ist über Anschlüsse 17 und 18 für die Gleichstromversorgung mit der Batterie 40 verbunden. Die Batterie kann beispielsweise in einem Griff des Deckels oder im Ventilgehäuse 3 untergebracht sein. Ist der Hallsensor 23 im Druckstift 2 angeordnet, so kann die Batterie 40 auch in der Hutmutter 1 untergebracht werden. Zum Abgreifen einer Spannung ist der Hallsensor in bekannter Weise mit einer Elektrode 19 versehen. Der Hallsensor 23 ist in der Nähe der Bohrung 24 angeordnet, beispielsweise in einer entsprechenden Ausnehmung des Gehäuses 3 untergebracht. Der Hallsensor 23 und die Anschlüsse sowie die Hallelektrode können jedoch auch in einen Aufsatz eingegossen sein.

Auf den Hallsensor 23 wirkt das Magnetfeld eines Stabmagneten 15, der im oberen Teil eines Schaftes 25 des Druckstiftes 22 angeordnet ist. Dieser Permanentmagnet 15 ist in seiner Bewegungs- bzw. Längsrichtung polarisiert. Das vom Stabmagneten ausgehende magnetische Feld ändert sich an der Stelle des Hallsensors im benutzten Bereich im wesentlichen linear in Abhängigkeit von der Verschiebung des Druckstiftes 2 im Ventilgehäuse 3. Der Verschiebung des Druckstiftes 2 wirkt die Kraft der Ventilfeder 5 entgegen, wobei diese Kraft proportional zum Druck im Dampfdruckkochtopf ist.

Die Fig. 1 zeigt das Ventil in einer Stellung, in welcher der Ventilkolben 20 den Topf nach aussen dichtet und sich somit in diesem ein Druck aufbauen kann. Der Hallsensor 23 befindet sich in der Nähe des einen Poles des Stabmagneten 15 und an diesem ist eine maximale Spannung abgreifbar.

Steigt der Druck im Dampfdruckkochtopf, so bewegt sich der Druckstift 2 gegen die rückwirkende Kraft der Ventilfeder 5 nach oben, beispielsweise in die in Fig. 2 gezeigte Stellung. Der Hallsensor 23 ist entsprechend der Verschiebung des Druckstifes 2 von der hier mit A bezeichneten Nullposition entfernt und einem Magnetfeld mit geringerer Flussdichte ausgesetzt. Die an der Hallelektrode 19 abgreifbare Spannung ist entsprechend niedriger, beispielsweise 0. Der Druck im Dampfdruckkochtopf ist hier beispielsweise 0,8 bar.

Steigt der Druck weiter bis zu einem massiven Ueberdruck, so bewegt sich der Druckstift 2 in die in Fig. 3 gezeigte Stellung, bei welcher die Ausblasöffnung 10 den Innenraum des Topfes mit der Aussenluft verbindet. Ueber die Ausblasöffnung 10 kann somit der Ueberdruck im Topf abgebaut werden. Der Stabmagnet 15 ist hierbei in einer Stellung, in welcher er mit einer maximalen magnetischen Flussdichte auf den Hallsensor 23 wirkt. Der Betrag der am Hallsensor abgreifbaren Spannung ist entsprechend ebenfalls maximal.

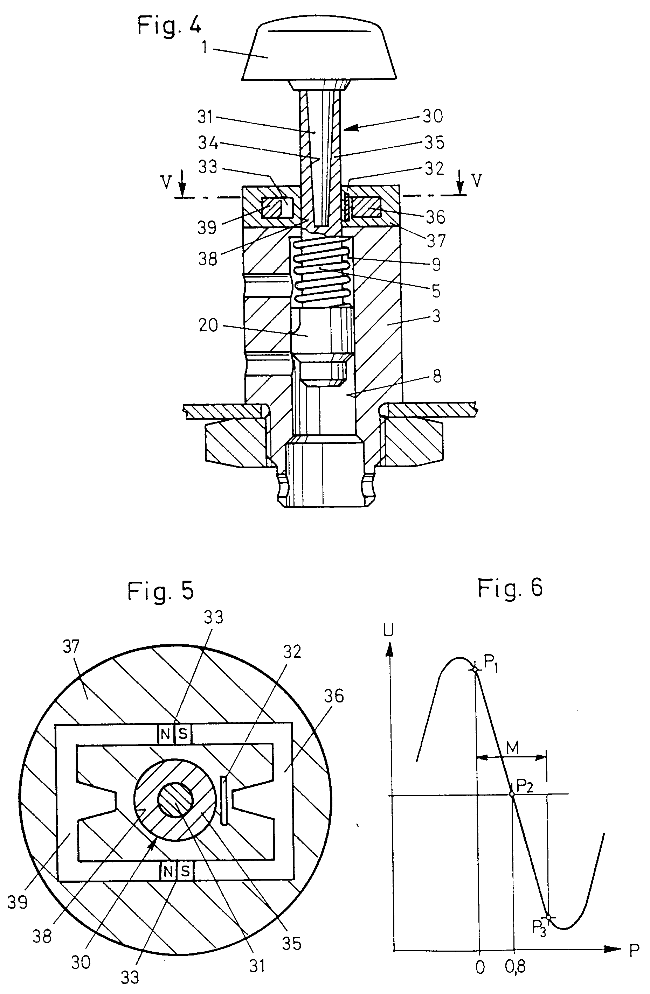

Wesentlich ist nun, dass die am Hallsensor 23 abgreifbare Spannung weitgehend in einem benutzten Messbereich M linear ist zu dem im Dampfdruckkochtopf herrschenden Druck. Dies zeigt die Figur 6, in welcher der Verlauf der am Hallsensor 23 abgreifbaren Spannung U in Funktion des Druckes P im Dampfdruckkochtopf eingezeichnet ist. Der Punkt P1 entspricht der Position des Druckstiftes 2 in der Ausgangsstellung gemäss Fig. 1, der Punkt P2 der mittleren Stellung gemäss Fig. 2 und schliesslich der Punkt P3 der Stellung des Druckstifes 2 bei massivem Ueberdruck im Dampfdruckkochtopf. Die am Hallsensor 23 abgreifbare Spannung ist somit ein direktes Mass des im Dampfdruckkochtopf herrschenden Druckes.

Die Fig. 4 und 5 zeigen eine Ausführungsvariante eines erfindungsgemässen Sicherheitsventils. Dieses weist ein Ventilgehäuse 3 auf, an dem oben ein ringförmiger Aufsatz 37 angebracht ist. In diesem sind fest seitlich neben einer Bohrung 38 spiegelsymmetrisch zwei Eisenanker 36 und 39 angeordnet. Zwischen den beiden Ankern 36 und 39 sind ebenfalls symmetrisch Permanentmagnete 33 angeordnet. Der Druckstift 30 ist gegenüber dem Hallsensor 32 im Luftspalt der beiden spiegelsymmetrischen Anker 36 und 39 angeordnet und weist in seinem Schaft einen konusförmigen Ferromagneten 31 auf. Dieser ist in eine entsprechend konische, oben offene Ausnehmung 34 des Schaftes 35 eingebracht. Wie ersichtlich, erstreckt sich der Ferromagnet 31 in Längsrichtung des Schaftes 35. Bewegt sich nun der Druckstift 30 mit zunehmendem Druck im Dampfdruckkochtopf nach oben, so verändert sich entsprechend stetig die mittlere magnetische Permeabilität des Luftspaltes und entsprechend dazu das vom Hallsensor 32 detektierte Magnetfeld. Der Hallsensor 32 ist hier vorzugsweise ein analoger Hallsensor. Auch mit diesem Ventil ist am Hallsensor 32 eine Spannung abgreifbar, die linear ist zum Druck im Dampfdruckkochtopf. Die Messung ist zudem trotz der bei einem solchen Ventil üblichen vergleichsweise grossen Toleranzen hinreichend genau und zudem stabil. Die symmetrische Ausbildung des Magnetsystems hat den Vorteil, dass der Druckstift 30 nicht einseitig seitlich angezogen und dadurch seine Verschiebbarkeit beeinträchtigt wird. Die Summe der beidseits des Druckstiftes 30 befindlichen Luftspaltbereiche ist konstant und wird durch das Spiel des Druckstiftes im Ventilgehäuse 3 nicht beeinflusst. Eine nicht hinreichend lineare Kennlinie des Positionssensors bzw. Hallsensors 32 kann durch eine entsprechende Kontur des Ferromagneten 31 korrigiert werden.

Denkbar ist eine hier nicht gezeigte Ausführung, bei welcher der Positionssensor im Druckstift und ein Magnet im Ventilgehäuse untergebracht sind. In diesem Fall könnte eine als Knopfzelle ausgebildete Batterie in der Hutmutter des Druckstiftes untergebracht sein.

Möglich ist zudem eine Ausführung, bei welcher die Batterie durch eine Solarzelle ersetzt ist. Das Signal des Positionssensors kann beispielsweise als Steuersignal zum Regeln irgendwelcher Steuergrössen benutzt werden.

## Patentansprüche

1. Sicherheitsventil für einen Dampfdruckkochtopf mit einem in einem Ventilgehäuse (3) axial verschiebbar gelagerten und unter der Wirkung einer Ventilfeder (5) stehenden Druckstift (2, 30), dadurch gekennzeichnet, dass ein magnetischer Positionssensor (23, 32) und Mittel (15, 31) vorgesehen sind, die ein auf den magnetischen Positionssensor (23, 32) wirkendes Magnetfeld erzeugen, dessen magnetische Flussdichte sich an der Stelle des magnetischen Positionssensors (23, 32) beim Verschieben des Druckstiftes (2) ändert, wobei bei geschlossenem Ventil im wesentlichen jeder Überdruck im Innern des Dampfdruckkochtopfes zwischen Null und einem oberen Grenzwert messbar ist und aufgrund der lokalen magnetischen Flussdichte die Position des Druckstiftes (2, 30) und damit der Druck im Innern des Kochtopfs feststellbar sind, dass der Positionssensor (23, 32) entsprechend der Verschiebung des Druckstiftes (2) von einer Nullposition (A) der genannten Mittel (15, 31) entfernt und einer entsprechend geänderten Flussdichte ausgesetzt ist, dass sich die magnetische Flussdichte an der Stelle des Positionssensors (23, 32) im benutzten Messbereich (M) im wesentlichen linear in Abhängigkeit von der Verschiebung des Druckstiftes (2, 30) ändert und der Verschiebung des Druckstiftes (2) die Ventilfeder (5) entgegenwirkt, deren Kraft proportional zum Druck im Dampfkochtopf ist, dass am Positionssensor (23, 32) eine Spannung abgreifbar ist, die im benutzten Messbereich (M) linear ist zu dem im Dampfdruckkochtopf herrschenden Druck (P) und die am Positionssensor (23, 32) abgreifbare Spannung ein direktes Mass des im Dampfdruckkochtopf herrschenden Druckes ist.

2. Sicherheitsventil nach Anspruch 1, dadurch gekennzeichnet, dass der Positionssensor (23,32) und wenigstens Teile der genannten Mittel (15,31) dem Druckstift (2,30) bzw. dem Ventilgehäuse (3) zugeordnet sind und beim Verschieben des Druckstiftes (2,30) relativ zueinander bewegt werden.

3. Sicherheitsventil nach Anspruch 1 oder 2, dadurch gekennzeichnet, dass der Positionssensor (23,32) und/oder wenigstens Teile der genannten Mittel (15,31) lösbar dem Druckstift (2,30) bzw. dem Ventilgehäuse (3) zugeordnet sind.

4. Sicherheitsventil nach einem der Ansprüche 1 bis 3, dadurch gekennzeichnet, dass der Druckstift (2) wenigstens im oberen Bereich einen Stabmagneten (15) aufweist, der in der Bewegungsrichtung des Druckstiftes (2) polarisiert ist und der die genannten Mittel bildet.

5. Sicherheitsventil nach Anspruch 4, dadurch gekennzeichnet, dass der Stabmagnet (15) wenigstens einen Teil des Schaftes des Druckstiftes (2) bildet.

6. Sicherheitsventil nach einem der Ansprüche 1 bis 5, dadurch gekennzeichnet, dass der magnetische Positionssensor (23,32) ein Halbleiter-Positionssensor ist.

7. Sicherheitsventil nach einem der Ansprüche 1 bis 6, dadurch gekennzeichnet, dass der magnetische Positionssensor (23,32) ein Hallsensor ist.

8. Sicherheitsventil nach einem der Ansprüche 4 bis 7, dadurch gekennzeichnet, dass der Stabmagnet (15) als Korrosionsschutz und als mechanischer Schutz ummantelt oder beschichtet ist.

9. Sicherheitsventil nach einem der Ansprüche 1 bis 8, dadurch gekennzeichnet, dass der Positionssensor (23,32) ein analoger Positionssensor ist.

10. Sicherheitsventil nach einem der Ansprüche 1 bis 9, dadurch gekennzeichnet, dass der Druckstift (30) einen konischen Ferromagneten (31) aufweist, der in einem Luftspalt eines symmetrischen Magnetsystems (36,39) angeordnet ist und dass in diesem Luftspalt der magnetische Positionssensor (32) derart angeordnet ist, dass das von ihm (32) detektierte Magnetfeld bei der Verschiebung des Druckstiftes (30) mit der Veränderung der mittleren magnetischen Permeabilität des Luftspaltes, in welchem der Ferromagnet (31) angeordnet ist, variiert.

11. Sicherheitsventil nach einem der Ansprüche 1 bis 10, dadurch gekennzeichnet, dass der Positionssensor pulsbetriebbar ist.

## Claims

1. Safety valve for a pressure-cooker having a pressure pin (2, 30) which is mounted in a manner which allows it to be displaced axially in a valve housing (3) and is subject to the action of a valve spring (5), characterized in that a magnetic position sensor (23, 32) and means (15, 31) are provided, which means generate a magnetic field which acts on the magnetic position sensor (23, 32) and the magnetic flux density of which changes at the location of the magnetic position sensor (23, 32) as the pressure pin (2) is displaced, in which arrangement, when the valve is closed, essentially any excess pressure inside the pressure-cooker between zero and an upper limiting valve can be measured and, on the basis of the local magnetic flux density, the position of the pressure pin (2, 30), and consequently the pressure inside the pressure-cooker, can be established, in that the position sensor (23, 32) is away from a zero position (A) of the said means (15, 31) by an amount corresponding to the displacement of the pressure pin (2) and is exposed to a correspondingly changed flux density, in that the magnetic flux density changes at the location of the position sensor (23, 32) in the measuring range (M) used essentially linearly as a function of the displacement of the pressure pin (2, 30) and the displacement of the pressure pin (2) is opposed by the valve spring (5), the force of which is proportional to the pressure in the pressure-cooker, in that at the position sensor (23, 32) there can be picked off a voltage, which is linear in the measuring range (M) used to the pressure (P) prevailing in the pressure-cooker and the voltage which can be picked off at the position sensor (23, 32) is a direct measure of the pressure prevailing in the pressure-cooker.

2. Safety valve according to Claim 1, characterized in that the position sensor (23, 32) and at least parts of the abovementioned means (15, 31) are assigned to the pressure pin (2, 30) or the valve housing (3), respectively, and as the pressure pin (2, 30) is displaced are moved relative to one another.

3. Safety valve according to Claim 1 or 2, characterized in that the position sensor (23, 32) and/or at least parts of the abovementioned means (15, 31) are assigned releasably to the pressure pin (2, 30) or to the valve housing (3), respectively.

4. Safety valve according to one of Claims 1 to 3, characterized in that the pressure pin (2) has, at least in the upper region, a bar magnet (15) which is polarized in the direction of movement of the pressure pin (2) and which forms the abovementioned means.

5. Safety valve according to Claim 4, characterized in that the bar magnet (15) forms at least part of the shank of the pressure pin (2).

6. Safety valve according to one of Claims 1 to 5, characterized in that the magnetic position sensor (23, 32) is a semiconductor position sensor.

7. Safety valve according to one of Claims 1 to 6, characterized in that the magnetic position sensor (23, 32) is a Hall sensor.

8. Safety valve according to one of Claims 4 to 7, characterized in that the bar magnet (15) is sheathed or coated as a means of protecting against corrosion and as mechanical protection.

9. Safety valve according to one of Claims 1 to 8, characterized in that the position sensor (23, 32) is an analog position sensor.

10. Safety valve according to one of Claims 1 to 9, characterized in that the pressure pin (30) has a conical ferromagnet (31) which is arranged in an air gap in a symmetrical magnetic system (36, 39), and in that the magnetic position sensor (32) is arranged in such a manner in this air gap that the magnetic field which it (32) detects during displacement of the pressure pin (30) varies with the change in the average magnetic permeability of the air gap in which the ferromagnet (31) is arranged.

11. Safety valve according to one of Claims 1 to 10, characterized in that the position sensor can be operated with pulse control.

## Revendications

1. Soupape de sécurité pour un auto-cuiseur comportant un poussoir (2, 30) monté de manière à être déplaçable axialement dans un boîtier de soupape (3) et soumis à l'action d'un ressort de soupape (5), caractérisée en ce qu'il est prévu un capteur magnétique de position (23, 32) et des moyens (15, 31), qui produisent un champ magnétique agissant sur le capteur magnétique de position (23, 32) et dont la densité de flux magnétique varie à l'emplacement du capteur magnétique de position (23, 32) lors du déplacement du poussoir (2), auquel cas lorsque la soupape est fermée, essentiellement toute surpression à l'intérieur de l'auto-cuiseur peut être mesurée entre la valeur zéro et la valeur limite supérieure, et la position du poussoir (2, 30) et par conséquent la pression à l'intérieur de l'auto-cuiseur peuvent être déterminées sur la base de la densité de flux magnétique locale, que le capteur de position (23, 32) est écarté d'une position (A) desdits moyens (15, 31) conformément au déplacement du poussoir (2) et est soumis à une densité de flux modifié correspondante, que la densité de flux magnétique varie à l'emplacement du capteur de position (23, 32) dans la plage de mesure utilisée (M), d'une manière essentiellement linéaire en fonction du déplacement du poussoir (2, 30) et que le ressort de soupape (5) s'oppose au déplacement du poussoir (2), la force du ressort étant proportionnelle à la pression dans l'auto-cuiseur, qu'au niveau du capteur de position (23, 32) peut être prélevée une tension, qui est linéaire dans la plage de mesure utilisée (M) par rapport à la pression (P) régnant dans l'auto-cuiseur et que la tension pouvant être prélevée au niveau du capteur de position (23, 32) est une mesure directe de la pression régnant dans l'auto-cuiseur.

2. Soupape de sécurité selon la revendication 1, caractérisée en ce que le capteur de position (23, 32) et au moins des parties desdits moyens (15, 31) sont associés au poussoir (2, 30) ou au boîtier de soupape (3) et sont déplaçables de façon relative entre eux lors du déplacement du poussoir (2, 30)

3. Soupape de sécurité selon la revendication 1 ou 2, caractérisée en ce que le capteur de position (23, 32) et/ou au n'oins des parties desdits moyens (15, 31) sont associés de façon amovible au poussoir (2, 30) ou au boîtier de soupape (3).

4. Soupape de sécurité selon l'une des revendications 1 à 3, caractérisée en ce que le poussoir (2) comporte, au moins dans sa partie supérieure, un barreau aimanté (15), qui est polarisé dans la direction de déplacement du poussoir (2) et forme lesdits moyens.

5. Soupape de sécurité selon la revendication 4, caractérisée en ce que le barreau aimanté (15) forme au moins une partie de la tige du poussoir (2).

6. Soupape de sécurité selon l'une des revendications 1 à 5, caractérisée en ce que le capteur magnétique de pression (23, 32) est un capteur de position à semiconducteurs.

7. Soupape de sécurité selon l'une des revendications 1 à 6, caractérisée en ce que le capteur de position magnétique (23, 32) est un capteur de Hall.

8. Soupape de sécurité selon l'une des revendications 4 à 7, caractérisée en ce que le barreau aimanté (15) est pourvu d'une enveloppe ou d'un revêtement en tant que système de protection contre la corrosion et système de protection mécanique.

9. Soupape de sécurité selon l'une des revendications 1 à 8, caractérisée en ce que le capteur de position (23, 32) est un capteur de position analogique.

10. Soupape de sécurité selon l'une des revendications 1 à 9, caractérisée en ce que le poussoir (30) possède un aimant ferromagnétique conique (31), qui est disposé dans un entrefer d'un système d'aimants symétrique (36, 39) et que le capteur magnétique de position (32) est disposé dans cet entrefer de telle sorte que le champ magnétique détecté par ce capteur (32) varie lors du déplacement du poussoir (30), avec la variation de la perméabilité magnétique moyenne de l'entrefer, dans lequel l'aimant ferromagnétique (31) est disposé.

11. Soupape de sécurité selon l'une des revendications 1 à 10, caractérisée en ce que le capteur de position peut être activé de façon impulsionnelle.
